# EUROPÄISCHE PATENTANMELDUNG

(11) **EP 1 422 818 A1**
(43) Veröffentlichungstag der Anmeldung: **26.05.2004**
(21) Anmeldenummer: 03025065.8
(22) Anmeldetag: 31.10.2003
(51) Int. Cl.: H02M 5/297

(54) **Frequenzumrichter**

(30) Priorität: 20.11.2002 DE 10254236
(71) Anmelder: Scherer, Gernot, 77716 Haslach (DE)
(72) Erfinder: Scherer, Gernot, 77716 Haslach (DE)
(74) Vertreter: Maucher, Wolfgang, Dipl.-Ing.

(57) **Zusammenfassung**

Ein Frequenzumrichter (1) weist einen elektrischen Anschluss (2) für eine über Kontakte (3) geführte, dreiphasige Stromversorgung und einen Anschluss für einen Verbraucher, insbesondere wenigstens einen Elektromotor (10) auf. Der Freuenzumrichter hat eingangsseitig einen Stromrichter (4) (Gleichrichter), nach dem Stromrichter einen Zwischenkreis (6), insbesondere einen Gleichspannungszwischenkreis mit einer Zwischenkreiskapazität (8) als Zwischenkreis-Speicherelement und einen an den Zwischenkreis angeschlossenen, von einer Steuereinrichtung (12) gesteuerten Stromrichter (7) (Inverter) mit Anschlüssen für den Verbraucher.

Das Zwischenkreis-Speicherelement (8) ist zur Glättung des Spannungseinbruchs bei Ausfall einer Phase der dreiphasigen Stromversorgung unter Berücksichtigung der angeschlossenen Last dimensioniert.

Der Antriebsmotor (10) kann dadurch weiterlaufen, was in vielen Anwendungsfällen, zum Beispiel in Galvanisierungsbetrieben, wo der Antriebsmotor zur Drehung einer Galvanisiertrommel mit darin enthaltenem Galvanisiergut dient, vorteilhaft ist, weil dadurch im Störungsfall mit Ausfall einer Phase eine Beschädigung oder Zerstörung der zu galvanisierenden Ware vermieden wird.

## Beschreibung

Die Erfindung bezieht sich auf einen Frequenzumrichter mit einem elektrischen Anschluss für eine über Kontakte geführte, dreiphasige Stromversorgung und einem Anschluss für einen Verbraucher, insbesondere wenigstens einen Elektromotor, wobei der Frequenzumrichter eingangsseitig einen Stromrichter (Gleichrichter), nach dem Stromrichter einen Zwischenkreis, insbesondere einen Gleichspannungs-Zwischenkreis mit einer Zwischenkreiskapazität als Zwischenkreis-Speicherelement und einen an den Zwischenkreis angeschlossenen, von einer Steuereinrichtung gesteuerten Stromrichter (Inverter) mit Anschlüssen für den Verbraucher aufweist.

Frequenzumrichter werden zum Betreiben von Elektromotoren eingesetzt, die dadurch in ihrer Drehzahl variabel sind. In der Regel werden damit Drehstrommotoren betrieben, wobei der gesteuerte Stromrichter (Inverter) über die Steuereinrichtung mittels Pulsweitenmodulation (PWM) drehzahlgesteuert wird. Als Stromversorgung kann ein 3-phasiges Netz dienen. Zur Überwachung von solchen Antriebseinheiten mit Frequenzumrichter sind Überwachungseinrichtungen bekannt, welche die Stromversorgung im Störungsfall abschalten und damit den Antriebsmotor stillsetzen. Die Überwachungseinrichtung tritt zum Beispiel in Funktion, wenn eine Phase der Stromversorgung ausfällt. Bei Frequenzumrichtern, deren eingangsseitige Stromversorgung über Kontakte geführt werden muss, tritt dieser Störfall durch Kontaktprobleme vermehrt auf. Das Abschalten der Antriebseinheit im Störungsfall kann bei bestimmten Anwendungen jedoch zu Folgeschäden führen.

Aufgabe der vorliegenden Erfindung ist es, einen Frequenzumrichter zum Betreiben eines Elektromotors zu schaffen, der bei einer auftretenden Störung, insbesondere bei Ausfall einer Phase der Stromversorgung einen kontrollierten Weiterbetrieb des angeschlossenen Motors ermöglicht.

Zur Lösung dieser Aufgabe wird vorgeschlagen, dass das Zwischenkreis-Speicherelement zur Glättung des Spannungseinbruchs bei Ausfall einer Phase der dreiphasigen Stromversorgung unter Berücksichtigung der angeschlossenen Last dimensioniert ist. Damit kann der Motor auch bei Ausfall einer Phase der Stromversorgung weiterlaufen. Das entsprechend dimensionierte Zwischenkreis-Speicherelement sorgt bei Ausfall einer Phase der 3-fasigen Stromversorgung für eine ausreichende Überbrückung des sonst auftretenden Spannungseinbruchs im Zwischenkreis.

Eine bevorzugte Anwendung des erfindungsgemäßen Frequenzumrichters sieht vor, dass er zur Versorgung eines Antriebsmotors einer drehbaren Galvanisiertrommel vorgesehen ist, die zusammen mit dem Antriebsmotor und dem Frequenzumrichter ein Trommelaggregat bildet, das von einer Station mit einem Galvanisier-Behandlungsbad zu einer nächsten Station mit einem weiteren Behandlungsbad umsetzbar ist, wobei das Trommelaggregat sowie die einzelnen Stationen in Umsetzposition miteinander kontaktierende, elektrische Anschlusskontakte aufweisen.

Gerade hierbei können bei Ausfall einer Phase und dadurch bedingtem Stillstand des die Galvanisiertrommel antreibenden Motors erhebliche Folgeschäden auftreten, insbesondere kann das Galvanisiergut beschädigt oder zerstört werden. In der Praxis wird bisher in einem solchen Störfall schnell versucht, den Fehler zu beheben, was aber in vielen Fällen nicht gelingt. Außerdem werden solche Fehler häufig nicht sofort bemerkt. Die Anschlusskontakte sind gerade in Galvanisierbetrieben mit entsprechend aggressiven Umgebungsbedingungen erhöhter Korrosion ausgesetzt, so dass vergleichsweise häufig Kontaktprobleme durch Korrosion auftreten können. Außerdem können Probleme durch verbogene Kontaktfinger, durch nicht korrektes Absetzen des Trommelaggregates bei den Stationen, Kabelbruch an den Anschlussdrähten und dergleichen auftreten.

Durch die erfindungsgemäßen Maßnahmen kann der Antriebsmotor für die Galvanisiertrommel weiterlaufen, so dass auch im Störungsfall mit Ausfall einer Phase eine Beschädigung oder Zerstörung der zu galvanisierenden Ware vermieden wird.

Zweckmäßigerweise ist eine Phasenausfall-Erkennung vorgesehen, die vorzugsweise mit einem optischen und/oder akustischen Alarmgeber verbunden ist. Dadurch wird auf einen Fehler hingewiesen, der zwar durch die erfindungsgemäße Ausgestaltung des Frequenzumrichters keine nachteiligen Folgen mehr hat, trotzdem aber beseitigt werden sollte, damit eine hohe Betriebssicherheit gewährleistet ist. Die erfindungsgemäße Maßnahme kann zwar einen Fehler bei Ausfall einer Phase kompensieren, jedoch wäre bei Kontaktproblemen mit gleichzeitigem Ausfall einer weiteren Phase kein Betrieb mehr möglich. Um dem vorzubeugen, kann durch die Phasenausfall-Erkennung in kurzer Zeit reagiert werden, um den Fehler zu beheben, wobei aber trotzdem der Trommelantrieb während dieser Zeit weiterläuft.

Nach einer Weiterbildung der Erfindung kann zur Erfassung der Effektivspannung im Zwischenkreis eine Messeinrichtung mit einer Messleitung zwischen der Steuereinrichtung und dem Zwischenkreis vorgesehen sein. Bei Verringerung der Effektivspannung im Zwischenkreis wird über die Steuereinrichtung die Pulsweitenmodulation so verändert, dass die verminderte, am Inverter anstehende Eingangsspannung (Zwischenkreisspannung) keine Auswirkungen auf das Betriebsverhalten des Elektromotors hat. Die vorgesehene Kapazität zur Überbrückung des durch einen Phasenausfall bedingten Spannungseinbruchs kann dadurch vergleichsweise klein sein.

Eine weitere, bevorzugte Anwendung kann darin bestehen, dass der Frequenzumrichter zur Versorgung eines oder mehrerer Elektromotoren eines verfahrbaren Krans, insbesondere eines Portalkrans vorgesehen ist, der zur Stromversorgung seiner über einen oder mehrere Frequenzumrichter betriebenen Antriebsmotoren eine Stromzuführung über Schleifkontakte aufweist.

Solche Portalkrane werden unter anderem in Galvanisierbetrieben zum Umsetzen der vorerwähnten Trommelaggregate von einem Galvanisierbad in ein nächsten eingesetzt. Auch hierbei tritt durch die Stromzuführung über Schleifkontakte prinzipiell das gleiche Problem auf wie bei den Trommelaggregaten. Befindet sich ein Trommelaggregat am Kran und fällt dieser wegen Kontaktproblemen an der Stromzuführung aus, kann das Trommelaggregat nicht weitertransportiert werden, so dass auch dadurch Beschädigungen oder Zerstörungen der zu galvanisierenden Ware innerhalb des Trommelaggregates auftreten können. Durch die erfindungsgemäße Maßnahme bei dem oder den Antrieben (Fahrantrieb, Hubantrieb) des Krans kann dies vermieden werden.

Zur weiteren Erhöhung der Betriebssicherheit kann die Stromversorgung des Frequenzumrichters eines mittels eines Krans oder dergleichen Transporteinrichtung umsetzbaren Trommelaggregates wahlweise über Anschlusskontakte bei den einzelnen Galvanisierstationen oder über Anschlusskontakte am Kran in Zwischentransport-Position des Trommelaggregates erfolgt.

Auch bei länger andauernden Umsetzvorgängen dreht dadurch die Galvanisiertrommel weiter, so dass Beschädigungen des Galvanisiergutes vermieden werden. Auch hierbei ist bei Ausfall einer Phase durch Kontaktfehler der Schleifkontakte einerseits für den Kran, über die auch die Stromzuführung für das angehängte Trommelaggregat erfolgt und andererseits bei der direkten Stromzuführung beim Trommelaggregat selbst, ein Weiterbetrieb des Trommelaggregates sichergestellt.

Zusätzliche Ausgestaltungen der Erfindung sind in den weiteren Unteransprüchen aufgeführt. Nachstehend ist die Erfindung mit ihren wesentlichen Einzelheiten anhand der Zeichnungen noch näher erläutert.

Es zeigt:
- Fig. 1: ein etwas schematisiertes Schaltbild eines erfindungsgemäßen Frequenzumrichters,
- Fig. 2: eine Darstellung einer Galvanisiereinrichtung mit Behandlungsbädern sowie mit Trommelaggregaten zur Aufnahme von Galvanisiergut und einer Transporteinrichtung,
- Fig. 3: eine Seitenansicht eines Behandlungsbades mit darin eingetauchter Galvanisiertrommel als Teil eines Trommelaggregates sowie mit strichliniert dargestelltem, von einem Kran angehobenen Trommelaggregat,
- Fig. 4: ein Blockschaltbild mit einem an einem Frequenzumrichter betriebenen Motor und Steuer- sowie Überwachungsblöcken,
- Fig. 5: eine Seitenansicht von elektrischen Anschlusskontakten für die Stromversorgung des Frequenzumrichters und
- Fig. 6: die elektrischen Anschlusskontakte gemäß Fig. 5 in einer um 90° gedrehten Ansicht.

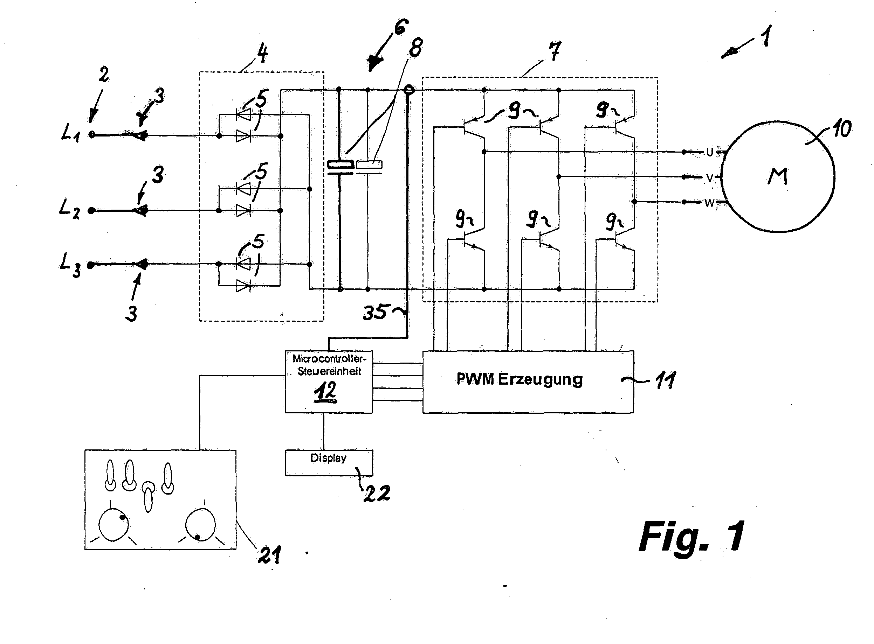

Ein Prinzipschaltbild eines Frequenzumrichters 1 ist in Fig. 1 gezeigt. Er weist einen elektrischen Anschluss 2 für eine über Kontakte 3 geführte, dreiphasige Stromversorgung auf. Der Frequenzumrichter 1 hat eingangsseitig einen Stromrichter 4 mit sechs als Drehstrombrücke geschalteten Dioden 5, mittels denen die dreiphasige Eingangswechselspannung gleichgerichtet wird. Diese Gleichspannung ist an einen Zwischenkreis 6 angeschlossen, welcher die Gleichspannungsversorgung für einen nachgeschalteten, gesteuerten Stromrichter 7 bildet.
Die von dem Stromrichter 4 kommende, pulsierende Gleichspannung wird durch Kondensatoren 8 geglättet. Der gesteuerte Stromrichter 7 weist sechs Halbleiterschalter, beispielsweise sechs Leistungstransistoren 9 auf, die zu drei Halbbrücken zusammengeschaltet sind. An diese ist ein Elektromotor 10 über die Anschlüsse U, V, W angeschlossen. Über einen Pulsweitenmodulator 11, der von einer Mikrocontroller-Steuereinheit 12 angesteuert wird, wird der Strom und die Frequenz für den angeschlossenen Elektromotor 10 gesteuert.

Wie bereits vorerwähnt, wird die eingangsseitige, dreiphasige Stromversorgung über Kontakte 3 geführt, die beispielsweise durch Druckkontakte, Steckkontakte oder Schleifkontakte gebildet sein können. Dies ist erforderlich bei beweglichen Antriebsaggregaten, die beispielweise von einer Arbeitsstation zu einer nächsten umgesetzt werden müssen oder über Schleifkontakte entlang einer Positionierstrecke beweglich sein müssen.
Solche Kontakte in der Stromversorgungszuleitung können aus unterschiedlichen Gründen Probleme machen, wobei meist eine der drei Phasen der Stromzuführung ausfällt. In einem solchen Störungsfall wird der Frequenzumrichter in der Regel ausgeschaltet und damit auch der angeschlossene Antriebsmotor.

Erfindungsgemäß ist nun vorgesehen, dass der Frequenzumrichter auch bei Ausfall einer Phase der Stromversorgung weiterarbeitet und der angeschlossene Elektromotor 10 weiterläuft. Durch eine fehlende Phase kommt es im Zwischenkreis 6 über einen entsprechenden Zeitabschnitt zu einem Spannungseinbruch. Bei dem im Ausführungsbeispiel gezeigten Frequenzumrichter 1 mit Gleichspannungs-Zwischenkreis 6 ist als Zwischenkreis-Speicherelement wenigstens ein Kondensator 8 vorgesehen. Zur Überbrückung des sonst bei einem Phasenausfall auftretenden Spannungseinbruchs ist die Zwischenkreis-Kapazität so dimensioniert, dass dieser Spannungseinbruch unter Berücksichtigung der angeschlossenen Last überbrückt werden kann. Der angeschlossene Elektromotor 10 kann dadurch auch bei Ausfall einer Phase der Stromversorgung weiterlaufen. Dies hat in vielen Anwendungsfällen erhebliche Vorteile.

Zur Erfassung der Effektivspannung im Zwischenkreis 6 kann eine Messeinrichtung mit einer Messleitung 35 zwischen der Steuereinrichtung 12 und dem der Zwischenkreis 6 vorgesehen sein.
Dadurch kann bei Ausfall einer Phase und Verringerung der Effektivspannung im Zwischenkreis diese Änderung an die Steuereinrichtung weitergegeben werden. Bedarfsweise kann dann über die Steuereinrichtung die Pulsweitenmodulation angepasst werden, so dass für den angeschlossenen Motor 10 praktisch keine Veränderungen seiner Stromversorgung auftreten.
Anstatt einer Messung der Effektivspannung im Zwischenkreis kann zur Phasenüberwachung auch eine Messung der Phasenspannung oder des Phasenstroms vor dem Stromrichter 4 vorgenommen und ausgewertet werden, wobei auch hierbei eine Beeinflussung der Pulsweitenmodulation vorgenommen werden kann. Außerdem kann die Phasenüberwachung oder die Überwachung der Effektivspannung im Zwischenkreis zur Fehlermeldung verwendet werden.

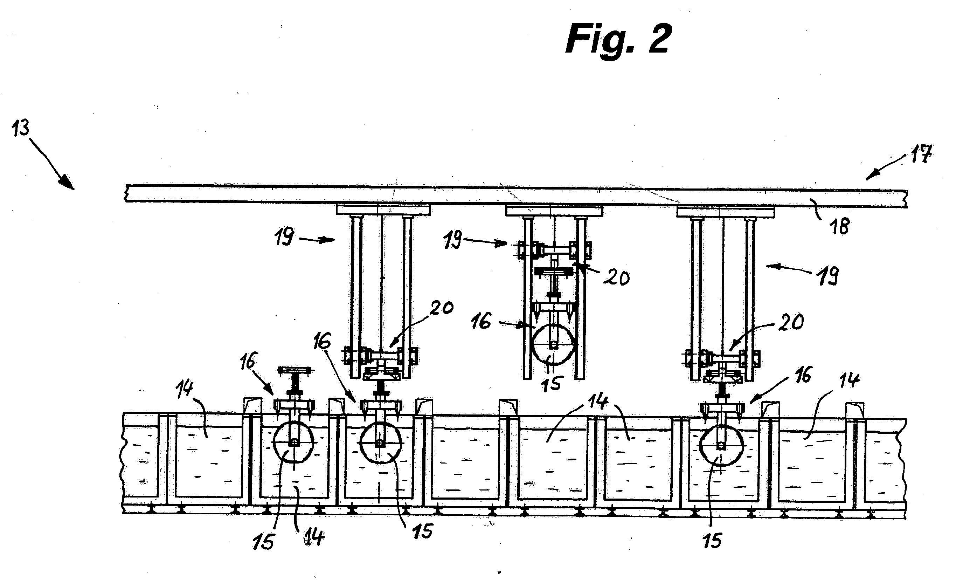

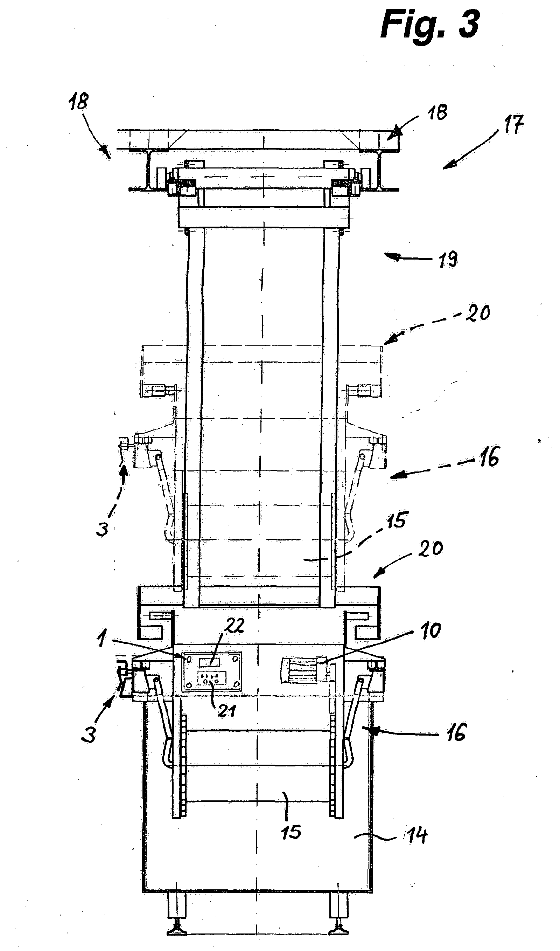

Fig. 2 zeigt einen Abschnitt einer Galvanisierungsanlage 13 mit einer Reihe nebeneinander angeordneter Galvanisier-Behandlungsbäder 14. Zum galvanischen Beschichten von Massenteilen, wie zum Beispiel Schrauben, Muttern oder anderen Kleinteilen werden drehbare Galvanisiertrommeln 15 zur Aufnahme dieser zu galvanisierenden Teile eingesetzt, die in die unterschiedlichen Galvanisierungs-Behandlungsbäder 14 eingetaucht werden. Eine Galvanisiertrommel 15 bildet zusammen mit einem Elektromotor 10 (Fig. 3) zum Antrieb der drehbaren Galvanisiertrommel 15 und einem Frequenzumrichter 1 ein Trommelaggregat 16, welches insgesamt von einer Station mit einem, Galvanisier-Behandlungsbad zu einer nächsten Station mit einem weiteren Behandlungsbad umsetzbar ist. Die Stromversorgung des Antriebsmotors 10 erfolgt über in Umsetzposition jeweils miteinander kontaktierende, elektrische Anschlusskontakte 3 bei den einzelnen Galvanisier-Behandlungsbadern 14. Für die Stromversorgung kann ein Niederspannungs-Drehstromnetz mit beispielsweise 24 Volt oder 42 Volt Nennspannung verwendet werden.

Zum Transportieren und Umsetzen der Trommelaggregate 16 von einem Behandlungsbad 14 in ein anderes dient eine Fördereinrichtung 17 (Fig. 2 und 3) die oberhalb der Reihe von Galvanisierungs-Behandlungsbädern 14 Führungsschienen 18 aufweist, an denen Transportwagen 19 verfahrbar geführt sind. Die Transportwagen 19 sind mit einer Greif- und Hubeinrichtung 20 versehen, welche an ein Trommelaggregat 16 ankoppelbar ist. Damit kann ein Trommelaggregat 16 ergriffen, aus dem Behandlungsbad nach oben entnommen und durch Verfahren des Transportwagens 19 zu einem anderen Behandlungsbad 14 transportiert und dort wieder abgesenkt und abgekoppelt werden.
Dieser Transportvorgang ist in Fig. 2 dargestellt. Linksseitig befindet sich ein abgesetztes Trommelaggregat 16, während daneben ein Transportwagen 19 bei einem dort befindlichen Trommelaggregat 16 positioniert ist. Weiter rechts ist dann erkennbar, wie ein Trommelaggregat 16 von einem Transportwagen 19 in angehobenem Zustand gehalten ist, während der rechte Transportwagen 19 gerade ein Trommelaggregat 16 in einem Behandlungsbad absetzt.
Die Transportwagen 19 haben Antriebe einerseits für die Hubbewegung der Greif- und Hubeinrichtung 20 und andererseits auch für die Verfahrbewegung längs der Führungsschienen 18. Auch hierfür können über erfindungsgemäße Frequenzumrichter betriebene Elektromotoren eingesetzt werden. Die Stromversorgung kann dabei über Schleifkontakte innerhalb der Führungsschienen 18 erfolgen, wobei sowohl ein Anschluss an ein Kleinspannungsnetz mit z.B. 24 Volt oder 42 Volt als auch ein Anschluss an ein übliches Drehstromnetz mit 400 Volt möglich ist.
Sowohl die Antriebsmotoren für die Drehbewegung der Galvanisiertrommeln 15 als auch die Antriebsmotoren der Transportwagen 19 weisen eine über Kontakte 3 geführte Stromversorgung auf. Ein Stillstand der sich drehenden Galvanisiertrommeln 15 und/oder ein Stillstand eines Transportwagens in einer Zwischenstellung mit gehaltenem Trommelaggregat 16 kann zu einer Beschädigung oder Zerstörung der in den Galvanisiertrommeln 15 befindlichen, zu galvanisierenden Teile führen, wenn Kontaktprobleme bei der dreiphasigen Stromzuführung der jeweiligen Antriebsaggregate auftreten. Durch die erfindungsgemäße Ausbildung des jeweiligen Frequenzumrichters zum Betreiben der Elektromotoren wird dies vermieden, da auch bei Ausfall einer Phase insbesondere durch Kontaktprobleme, die Antriebsmotoren auch bei zweiphasiger Stromzuführung weiterlaufen können.
Bei Galvanisierungsanlagen 13 sind die Kontakte der jeweiligen Stromzuführungen insbesondere durch Korrosion besonders gefährdet. Der Weiterbetrieb der Antriebe auch bei auftretenden Kontaktproblemen bedeutet gerade in Galvanisierungsanlagen 13 einen erheblichen Vorteil, weil einerseits Produktionsausfallzeiten vermieden werden und andererseits Qualitätseinbußen oder Ausschuss des zu galvanisierenden Gutes vermieden werden.

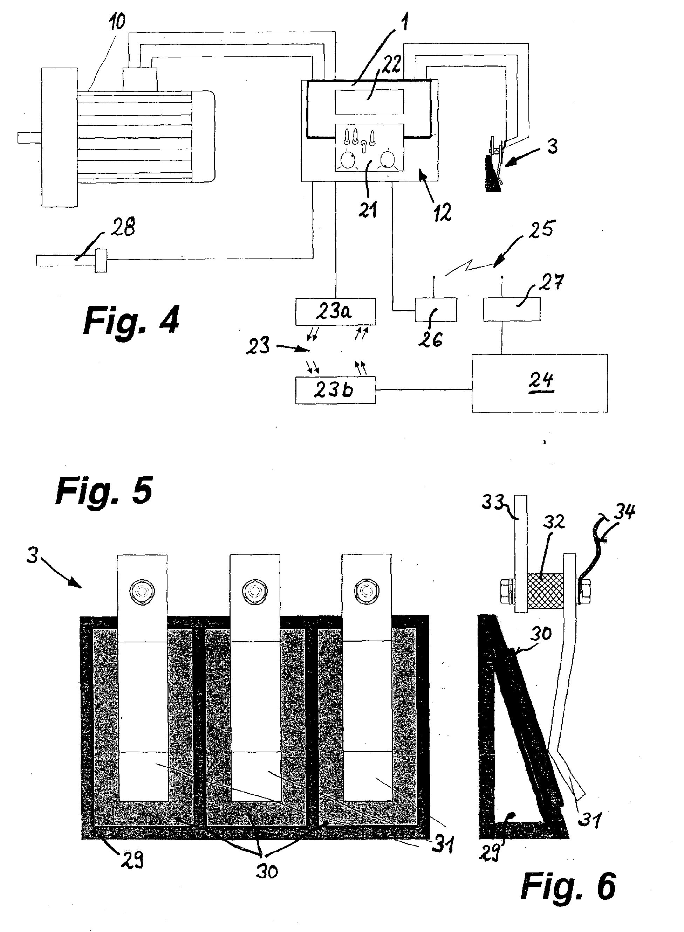

In Fig. 3 ist ein in ein Galvanisierungs-Behandlungsbad 14 abgesenktes Trommelaggregat 16 mit seinen wesentlichen Baugruppen, nämlich der Galvanisiertrommel 15 dem Elektromotor 10 als Drehantrieb für die Trommel sowie dem Frequenzumrichter 1 mit Steuereinheit erkennbar. Am linken Behälterrand erkennt man darüber hinaus Stromzuführungs-Kontakte 3, die in den Fig. 5 und 6 detailliert dargestellt sind. Diese Kontakte 3 kontaktieren beim Absetzen des Trommelaggregates 16 in der in Fig. 3 gezeigten Umsetzposition.
Zur Verdeutlichung ist in dieser Figur noch ein strichliniert angedeutetes, von der Greif- und Hubeinrichtung 20 angehobenes Trommelaggregat 16 angedeutet.

Erwähnt sei noch, dass der Elektromotor 10 für den Drehantrieb der Galvanisiertrommel 15 in Transportstellung, wo das Trommelaggregat 16 von dem Transportwagen 19 angehoben und gehalten ist, weiterlaufen kann. Dazu erfolgt die Stromversorgung über die hier nicht näher dargestellten Schleifkontakte der Fördereinrichtung und den Transportwagen 19.

Fig. 4 zeigt den prinzipiellen Aufbau einer Antriebseinheit für eine Galvanisiertrommel 15. Es ist dabei ein Funktionsblock mit dem Frequenzumrichter 1, der Mikrokontroller-Steuereinheit 12 mit Bedienteil 21 und Display 22 erkennbar. An den Frequenzumrichter 1 ist eingangsseitig eine über die Kontakte 3 geführte Stromversorgung angeschlossen. Ausgangsseitig ist an den Frequenzumrichter 1 ein Drehstrom-Antriebsmotor 10 angeschlossen.
Zum Datenaustausch und zur Übertragung von unterschiedlichen Bearbeitungsprogrammen ist eine Infrarotübertragungsstrecke 23 mit einem an die Steuereinheit 12 angeschlossenen Infrarot-Sendeempfänger 23a und einem an eine Steuerung 24 der Galvanikanlage angeschlossenen Infrarot-Sendeempfänger 23b vorgesehen. Die Infrarotübertragungsstrecke ist durch eine entsprechend örtliche Zuordnung der beiden Infrarot-Sendeempfänger 23a, 23b dann aktiv, wenn sich das Trommelaggregat 16 vorzugsweise an einer Beladestation, wo die Trommel mit zu galvanisierenden Teilen bestückt wird, befindet oder aber in Absetzposition bei einem Galvanisierungs-Behandlungsbad.

Durch unterschiedliche Bearbeitungsprogramme kann die Drehbewegung der Galvanisiertrommel 15 dem jeweiligen Behandlungsgut und dem vorgesehenen Behandlungsverfahren angepasst werden. Beispielsweise kann die Drehzahl der Galvanisiertrommel so eingestellt werden, dass bei der Behandlung von empfindlichen Teilen, zum Beispiel Schrauben mit Feingewinde, die Gefahr von Beschädigungen zumindest reduziert wird. Außerdem besteht die Möglichkeit, den Antriebsmotor im Intervallbetrieb arbeiten zu lassen, insbesondere in Vorbehandlungsstationen, wo nur kurze Laufintervalle von beispielsweise fünf Sekunden Laufzeit vorgesehen sind und sich daran jeweils Stillstandzeiten von beispielsweise 120 Sekunden anschließen. Dadurch ist eine besonders schonende Behandlung der Teile möglich. Weiterhin kann ein Schaukelbetrieb insbesondere für relativ lange Teile wie zum Beispiel Stangen, Gewindestangen und dergleichen vorgesehen sein. In dieser Betriebsart wird die Trommel für eine einstellbare Zeit in eine Drehrichtung gedreht und anschließend für eine einstellbare Zeit in die andere Richtung.
Es kann somit ein individuelles Programm für die zu behandelnden Teile in das Gerät geladen werden und somit eine kombinierte Behandlung der vorgeschriebenen Betriebsarten in den verschiedenen Stationen ermöglicht sein. Über die Infrarotübertragungsstrecke 23 können auch Artikeldaten und das jeweilige Füllgewicht der Trommel übertragen und vorzugsweise auch in dem Display 22 angezeigt werden. Dadurch wird die Zuordnung der Teile beim Entleeren der Trommel vereinfacht.

zur Fehlermeldung, gegebenenfalls auch zur Übertragung von Daten ist noch eine Funkübertragungsstrecke 25 mit einem an die Steuereinheit 12 angeschlossenen Sender 26 und einem an die Steuerung 24 angeschlossenen Empfänger 27 vorgesehen. Der Betriebszustand des Trommelaggregates kann dadurch überwacht und im Fehlerfall sofort an zentraler Stelle erkannt werden. Insbesondere kann mit Hilfe eines bei dem Motor 10 angedeuteten Drehzahlsensors 28 die tatsächliche Drehung des Motors beziehungsweise der von diesem angetriebenen Galvanisiertrommel 15 überwacht werden. Bei Trommelstillstand kann dadurch sofort reagiert werden. Weiterhin können über diese Funkübertragungsstrecke 25 Betriebsdaten übertragen werden, beispielsweise auch wenn eine Phase der Stromversorgung ausgefallen ist. Der Motor läuft zwar in diesem Falle weiter, jedoch können entsprechende Gegenmaßnahmen ergriffen werden, um das beispielsweise vorhandene Kontaktproblem zu beseitigen. Weiterhin ist eine kontinuierliche Überwachung des Phasenstroms des Antriebsmotors und damit ein Schutz gegen Überlastung (elektronischer Motorschutzschalter) möglich.

Die Fig. 5 und 6 zeigen Kontakte 3, über die die Stromversorgung für ein Trommelaggregat 16 geführt ist. Es ist hierbei eine Kontakthalterung 29 aus Kunststoff vorgesehen, die am Rand eines Behandlungsbades befestigt ist. Auf dieser Kontakthalterung 29 befinden sich drei Kontaktplatten 30 aus Metall, die auf ihrer Rückseite mit Zuleitungen für die Stromversorgung versehen sind. Den Gegenkontakt bilden Kontaktfinger 31, die über einen Schwingungsdämpfer 32 (Fig. 6), der gleichzeitig als Isolator und als elastisches Element für den Federdruck dient, mit einer Befestigung 33 am Trommelaggregat 16 verbunden ist. An jeden Kontaktfinger 31 ist eine Anschlussleitung 34 für die Stromversorgung des Frequenzumrichters 1 angeschlossen. In Fig. 6 ist gut erkennbar, dass die Kontaktplatten 30 schräg angeordnet sind, so dass beim vertikalen Absenken des Trommelaggregates 16 und damit auch der Kontaktfinger 31, diese auf die Kontaktschrägen auftreffen und dann etwas elastisch ausweichen können, wobei ein entsprechender Anpressdruck aufgebaut wird.
Die spezielle Ausbildung der Kontakte trägt ebenfalls mit zur Betriebssicherheit der Anlage bei und ergänzt die bei dem Frequenzumrichter 1 vorgesehenen, elektrischen Maßnahmen, die ebenfalls zur Betriebssicherheit wesentlich beitragen.

## Patentansprüche

1. Frequenzumrichter (1) mit einem elektrischen Anschluss (2) für eine über Kontakte (3) geführte, dreiphasige Stromversorgung und einem Anschluss für einen Verbraucher, insbesondere wenigstens einen Elektromotor (10), wobei der Frequenzumrichter eingangsseitig einen Stromrichter (4) (Gleichrichter), nach dem Stromrichter einen Zwischenkreis (6), insbesondere einen Gleichspannungszwischenkreis mit einer Zwischenkreiskapazität (8) als Zwischenkreis-Speicherelement und einen an den Zwischenkreis angeschlossenen, von einer Steuereinrichtung (12) gesteuerten Stromrichter (7) (Inverter) mit Anschlüssen für den Verbraucher aufweist, **dadurch gekennzeichnet, dass** das Zwischenkreis-Speicherelement (8) zur Glättung des Spannungseinbruchs bei Ausfall einer Phase der dreiphasigen Stromversorgung unter Berücksichtigung der angeschlossenen Last dimensioniert ist.

2. Frequenzumrichter nach Anspruch 1, **dadurch gekennzeichnet, dass** zur Erfassung der Effektivspannung im Zwischenkreis (6) eine Messeinrichtung mit einer Messleitung (35) zwischen der Steuereinrichtung (12) und dem Zwischenkreis(6) vorgesehen ist.

3. Frequenzumrichter nach Anspruch 1 oder 2, **dadurch gekennzeichnet, dass** eine Phasenausfall-Erkennung vorgesehen ist, die vorzugsweise mit einem optischen und/oder akustischen Alarmgeber verbunden ist.

4. Frequenzumrichter nach einem der Ansprüche 1 bis 3, **dadurch gekennzeichnet, dass** er zur Versorgung eines Antriebsmotors (10) einer drehbaren Galvanisiertrommel (15) vorgesehen ist, die zusammen mit dem Antriebsmotor und dem Frequenzumrichter ein Trommelaggregat (16) bildet, das von einer Station mit einem Galvanisier-Behandlungsbad (14) zu einer nächsten Station mit einem weiteren Behandlungsbad (14) umsetzbar ist und dass das Trommelaggregat sowie die einzelnen Stationen in Umsetzposition miteinander kontaktierende, elektrische Anschlusskontakte (3) aufweisen.

5. Frequenzumrichter nach einem der Ansprüche 1 bis 4, **dadurch gekennzeichnet, dass** ein Sensor (28) zur Drehzahlüberwachung der Galvanisiertrommel (15) vorgesehen ist.

6. Frequenzumrichter nach einem der Ansprüche 1 bis 5, **dadurch gekennzeichnet, dass** die Steuereinrichtung (12) wenigstens eine drahtlose Schnittstelle (23,25) zur Übertragung von Programmdaten und/oder Messdaten, insbesondere von Fehlermessdaten aufweist, und dass vorzugsweise an einer Beladestation eine Datenübertragung vorgesehen ist.

7. Frequenzumrichter nach einem der Ansprüche 1 bis 3 und 5, 6, **dadurch gekennzeichnet, dass** er zur Versorgung eines oder mehrerer Elektromotoren eines verfahrbaren Krans oder dergleichen Fördereinrichtung (17), insbesondere eines Portalkrans vorgesehen ist, der zur Stromversorgung seiner über einen oder mehrere Frequenzumrichter (1) betriebenen Antriebsmotoren eine Stromzuführung über Schleifkontakte aufweist.

8. Frequenzumrichter nach einem der Ansprüche 1 bis 7, **dadurch gekennzeichnet, dass** die Stromversorgung des Frequenzumrichters einen mittels eines Krans oder dergleichen Transporteinrichtung umsetzbaren Trommelaggregates (16) wahlweise über Anschlusskontakte bei den einzelnen Galvanisier-Stationen oder in Zwischentransport-Position des Trommelaggregates über Anschlusskontakte (3) am Kran erfolgt.
